# EUROPÄISCHE PATENTSCHRIFT

(11) **EP 0 628 748 B1**
(45) Veröffentlichungstag und Bekanntmachung des Hinweises auf die Patenterteilung: **12.03.1997**
(21) Anmeldenummer: 94107590.5
(22) Anmeldetag: 17.05.1994
(51) Int. Cl.: F16H 3/091

(54) **Zahnräderwechselgetriebe der Vorgelegebauart**
Countershaft transmission
Boîte de vitesses du type à arbres secondaires

(30) Priorität: 07.06.1993 DE 4318713
(43) Veröffentlichungstag der Anmeldung: 14.12.1994
(73) Patentinhaber: MERCEDES-BENZ AG, 70327 Stuttgart (DE)
(72) Erfinder: Zaiser, Wolfgang, Dipl.-Ing., D-89555 Steinheim (DE); Bender, Helmut, Dipl.-Ing., D-74385 Pleidelsheim (DE)

(56) Entgegenhaltungen:
- EP-A- 0 206 563
- EP-A- 0 239 553
- EP-A- 0 512 214
- DE-A- 4 206 033
- US-A- 5 186 065

## Beschreibung

Die Erfindung bezieht sich auf ein Zahnräderwechselgetriebe nach dem Oberbegriff von Patentanspruch 1.

Bei einem bekannten Zahnräderwechselgetriebe der eingangs genannten Art (EP 0 512 214 A2) sind die Losräder der Zahnradstufen für einen Vorwärtsgang und den Rückwärtsgang fest auf einer zusätzlichen Zwischenwelle angeordnet, welche als Hohlwelle konzentrisch auf der Eingangswelle angeordnet und mit letzterer durch die Schaltkupplung des einen Vorwärtsganges kuppelbar ist, welche mithin auch im Rückwärtsgang eingerückt sein muß. Die Festräder der dem Vorwärtsgang und dem Rückwärtsgang zugehörigen Zahnradstufen sind durch eine Wechselschaltkupplung mit der Ausgangswelle kuppelbar, welche einerseits durch die Wechselschaltkupplung und andererseits auch deswegen lang baut, weil die Ausgangswelle noch ein Festrad der Zahnradstufe des weiteren Vorwärtsganges aufweist, deren Losrad auf der Vorgelegewelle gelagert ist.

Aus der DE 31 16 383 A1 ist ein Zahnräderwechselgetriebe anderer Art bekannt, bei welchem anstelle einer Vorgelegewelle eine zweite Ausgangswelle verwendet ist, die wie auch die erste Ausgangswelle über ein zu ihr drehfestes Ausgangszahnrad mit einem äußeren Ringzahnrad eines Achsdifferentiales kämmt. Die beiden Ausgangswellen sind - da eine Vorgelegewelle nicht verwendet ist - mit der Eingangswelle direkt über jeweils drei Zahnradstufen verbunden, deren Festräder allesamt auf der Eingangswelle sitzen. Bei diesem bekannten Zahnräderwechselgetriebe sind bei einer Ausführungsform zwei Zahnradstufen zum Antrieb der einen Ausgangswelle in je einem Vorwärtsgang mit je einer Zahnradstufe zum Antrieb der anderen Ausgangswelle in zwei weiteren Vorwärtsgängen über zugehörige Festräder der Eingangswelle zu je einer gebundenen Zahnradstufe zusammengefaßt. Während für einen weiteren Vorwärtsgang die verbleibende dritte, nicht gebundene Zahnradstufe zum Antrieb der einen Ausgangswelle verwendet ist, wird der Rückwärtsgang bei diesem bekannten Zahnräderwechselgetriebe unter Vermittlung der dritten, nicht gebundenen Zahnradstufe zum Antrieb der anderen Ausgangswelle gebildet. Zu diesem Zweck ist die mit dieser anderen Ausgangswelle drehfest verbundene Schaltschiebemuffe der Wechselschaltkupplung, welche zum fakultativen Ankuppeln der Losräder der beiden gebundenen Zahnradstufen an diese andere Ausgangswelle verwendet ist, mit einem äußeren Zahnkranz versehen, welcher mit dem als Umkehrrad auf einer zusätzlichen Zwischenwelle gelagerten mittleren Zahnrad in Eingriff bringbar ist, welches mit demjenigen Festrad der Eingangswelle kämmt, welches zu der dritten, nicht gebundenen Zahnradstufe der besagten anderen Ausgangswelle gehört.

Aus der US-PS 51 84 522 ist ein weiteres gattungsfremdes Zahnräderwechselgetriebe bekannt, bei welchem zwar sowohl eine Vorgelegewelle als auch eine mit antreibbaren Fahrzeugrädern in ständige Antriebsverbindung bringbare Ausgangswelle jeweils parallel zu einer von einem Antriebsmotor her antreibbaren Eingangswelle angeordnet - als Losrad für die gebundene Zahnradstufe zum ständigen Antrieb der Vorgelegewelle durch die Eingangswelle im Gegensatz zum Gattungsbegriff jedoch das auf einer zusätzlichen Zwischenwelle angeordnete Umkehrrad der Zahnradstufe für die Bildung des Rückwärtsganges verwendet ist. Schließlich unterscheidet sich dieses bekannte Zahnräderwechselgetriebe vom Gattungsbegriff weiterhin noch dadurch, daß das Festrad der Zahnradstufe des Rückwärtsganges nicht der Ausgangswelle zugeordnet ist, sondern auf der Eingangswelle gelagert ist, und daß die Schaltkupplungen nicht reibschlüssig sind. Obwohl ein auf der Eingangswelle angoerdnetes Losrad und ein auf der Vorgelegewelle angeordnetes Losrad über ein Festrad der Ausgangswelle zu einer gebundenen Zahnradstufe zum Schalten von zwei Vorwärtsgängen zusammengefaßt sind, ist eine solche Bindung für die dreigliedrige Zahnradstufe des Rückwärtsganges nicht möglich, weil bei dieser das Festrad und das Umkehrrad bereits in die gebundene Zahnradstufe zum ständigen Antrieb der Vorgelegewelle integriert sind.

Somit waren durch den aufgezeigten Stand der Technik drei sich gegenseitig ausschließende Wege zur prinzipiellen Gestaltung eines für den Quereinbau im Fahrzeug vorgesehenen Zahnräderwechselgetriebes gewiesen. Während der erste Weg durch das bekannte gattungsbildende Zahnräderwechselgetriebe einerseits zu einer gebundenen Zahnradstufe zum ständigen Antrieb der Vorgelegewelle durch die Eingangswelle mit Anordnung des Losrades auf der Ausgangswelle und andererseits zur Verwendung eines Doppelzahnrades als Losräder für eine ungebundene Zahnradstufe eines Vorwärtsganges und die dreigliedrige Zahnradstufe des Rückwärtsganges mit einer reibschlüssigen Schaltkupplung für das Ankuppeln des Doppelzahnrades an die Eingangswelle führt und dieser Weg zusätzliche Kupplungsmittel (Wechselschaltkupplung) zum Festlegen des jeweiligen Festrades dieser beiden Zahnradstufen gegenüber der Ausgangswelle erforderlich macht, sieht der zweite Weg gemäß dem betreffenden gattungsfremden Zahnräderwechselgetriebe die Verwendung einer zweiten Ausgangswelle anstelle einer Vorgelegewelle sowie eine völlig anders geartete Bildung des Rückwärtsganges unter Verwendung eines Zahnkranzes einer Schaltschiebemuffe einer Wechselschaltkupplung vor, wobei zwar vier Vorwärtsgänge durch zwei über Festräder der Eingangswelle gebundene Zahnradstufen gebildet werden, eine derartige Bindung für den Rückwärtsgang wegen der Einbeziehung einer Schaltschiebemuffe in die betreffende Zahnradstufe jedoch nicht möglich ist. Schließlich führt der durch das andere gattungsfremde Zahnräderwechselgetriebe aufgezeigte dritte Weg in eine noch andere Richtung, nämlich zu einer zusätzlichen Verwendung der dreigliedrigen Zahnradstufe des Rückwärtsganges mit Eingliederung sowohl des Festrades als auch des Umkehrrades in die gebundene Zahnradstufe zum ständigen Antrieb der Vorgelegewelle durch die Eingangswelle.

Die der Erfindung zugrunde liegende Aufgabe besteht im wesentlichen darin, ein Zahnräderwechselgetriebe der Vorgelegebauart zu schaffen, das in den Richtungen der Drehachsen der parallelen Getriebewellen kurz baut.

Die erläuterte Aufgabe ist gemäß der Erfindung in vorteilhafter Weise mit den Merkmalen von Patentanspruch 1 gelöst.

Bei dem Zahnräderwechselgetriebe nach der Erfindung ist der bei dem bekannten gattungsgemäßen Zahnräderwechselgetriebe für die Wechselschaltkupplung und das eine Festrad erforderliche Bauraum im Bereich der Ausgangswelle eingespart. Ebenso ist der bei dem bekannten gattungsgemäßen Zahnräderwechselgetriebe für die Wechselschaltkupplung erforderliche Schaltaufwand bei dem Zahnräderwechselgetriebe nach der Erfindung eingespart.

Bei dem Zahnräderwechselgetriebe nach der Erfindung sind auf der Eingangswelle nur noch drei Zahnräder gegenüber den vier Zahnrädern bei dem bekannten gattungsgemäßen Zahnräderwechselgetriebe angeordnet.

Bei dem Zahnräderwechselgetriebe nach der Erfindung ist die Anzahl der auf der Ausgangswelle erforderlichen Festräder weiterhin noch um ein weiteres Festrad gegenüber dem bekannten gattungsgemäßen Zahnräderwechselgetriebe vermindert.

Bei dem Zahnräderwechselgetriebe nach der Erfindung ist durch die Ausgestaltung nach Patentanspruch 2 der Rückwärtsgang unter Last schaltbar.

Bei dem Zahnräderwechselgetriebe nach der Erfindung ist der Bauaufwand aufgrund der gebundenen Zahnradstufen gering.

Bei dem Zahnräderwechselgetriebe nach der Erfindung sind bei der Schaltkupplung für den Rückwärtsgang aufgrund deren Lage im Kraftfluß zwischen Ein- und Ausgangswelle die Relativdrehzahlen gering.

Einzelheiten der Erfindung ergeben sich aus der nachstehenden Beschreibung eines in der Zeichnung schematisch dargestellten Ausführungsbeispieles. In der Zeichnung bedeuten
- Fig. 1: ein Getriebeschema eines Zahnräderwechselgetriebes nach der Erfindung,
- Fig. 2: einen schematischen Querschnitt durch das Zahnräderwechselgetriebe von Fig. 1 zur Verdeutlichung der räumlichen Anordnung der Getriebewellen, und
- Fig. 3: eine Tabelle zur Angabe der im jeweiligen Gang bei dem Zahnräderwechselgetriebe von Fig. 1 eingerückten Schaltkupplung.

Eine Eingangswelle 6 eines Zahnräderwechselgetriebes ist in der üblichen Weise durch einen Antriebsmotor über einen hydrodynamischen Drehmomentwandler antreibbar und durch zwei reibschlüssige Schaltkupplungen K4 und K3 mit je einem Losrad 12 und 19 zweier Zahnradstufen 13 und 18 kuppelbar, deren Festräder 11 und 15 beiderseits eines Ritzels 21 jeweils bewegungsfest auf einer zur Eingangswelle 6 parallelen Ausgangswelle 5 sitzen. Das Ritzel 21 ist ebenfalls drehfest zur Ausgangswelle 5 und kämmt mit einem Ringzahnrad 26, welches anstelle eines sonst üblichen Tellerrades ein Achsausgleichsgetriebe 22 antreibt, welches ausgangsseitig in bekannter Weise mit koaxial zu einer geometrischen Hauptachse 20-20 gelagerten Achsantriebshalbwellen 23 und 24 verbunden ist.

Auf der zum Ritzel 21 entgegengesetzten Seite des Festrades 11 ist auf der Ausgangswelle 5 ein Losrad 8 in Form eines Doppelzahnrades drehbar angeordnet, welches als Teil einer gebundenen Zahnradstufe 7 mit seinem größeren Zahnkranz mit einem auf der
Eingangswelle 6 sitzenden Festrad 27 und mit seinem kleineren Zahnkranz mit einem auf einer zu Ein- und Ausgangswelle 6 und 5 parallelen Vorgelegewelle 4 sitzenden Festrad 28 kämmt, so daß die Vorgelegewelle 4 durch die gebundene Zahnradstufe 7 ständig von der Eingangswelle 6 angetrieben ist. Das Losrad 8 ist durch eine reibschlüssige Schaltkupplung K5 mit der Ausgangswelle 5 kuppelbar.

In dem axial mittleren Bereich der Vorgelegewelle 4 sind zwei reibschlüssige Schaltkupplungen K2 und KR vorgesehen, um die Vorgelegewelle 4 mit einem Losrad 9 einer Zahnradstufe 10 oder mit einem Losrad 17 einer dreigliedrigen Zahnradstufe 10 kuppeln zu können. Das Losrad 9 der Zahnradstufe 10 kämmt ebenfalls mit dem Festrad 11 der Zahnradstufe 13, so daß die Zahnradstufen 10 und 13 gebunden sind.

Auf der zur Schaltkupplung KR entgegengesetzten Seite des Losrades 17 ist ein weiteres Losrad 29 einer Zahnradstufe 30 vorgesehen, das durch eine reibschlüssige Schaltkupplung K1 mit der Vorgelegewelle 4 kuppelbar ist. Das Losrad 29 kämmt mit einem auf der Ausgangswelle 5 sitzenden Festrad 31.

Auf einer zu den Wellen 4 bis 6 parallelen Zwischenwelle 16 ist ein den Drehsinn der Ausgangswelle 5 gegenüber dem Drehsinn der Eingangswelle 6 umkehrendes mittleres Zahnrad 25 drehbar gelagert, welches sowohl mit dem Festrad 15 der Zahnradstufe 18 als auch mit dem Losrad 17 der Zahnradstufe 14 kämmt.

Demzufolge sind auch die Zahnradstufen 14 und 18 gebunden.

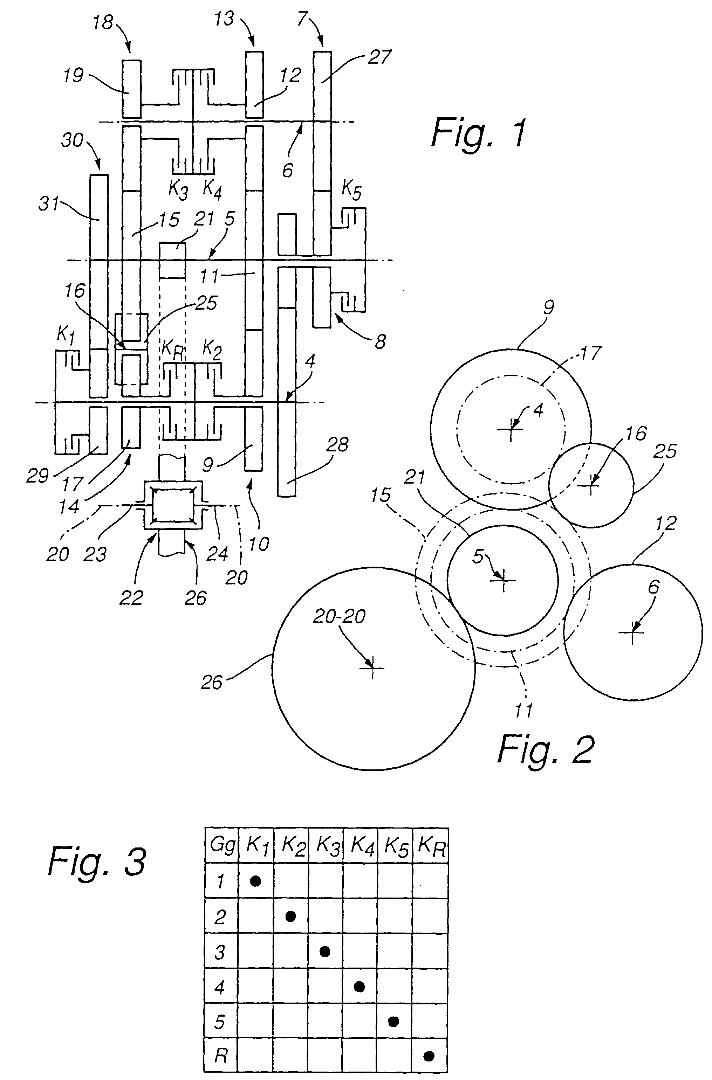

Aus Fig. 2 ist in selbstinterpretierender Weise die räumliche Lage der Wellen 4 bis 6 und 16 sowohl untereinander als auch relativ zur geometrischen Hauptachse 20-20 des Achsausgleichsgetriebes 22 ersichtlich.

Gemäß der Schalttabelle der Fig. 3 ist im ersten Gang die Schaltkupplung K1 eingerückt und dadurch das Losrad 29 der Zahnradstufe 30 mit der Vorgelegewelle 4 gekuppelt. Infolgedessen verläuft der Kraftfluß von der Eingangswelle 6 über die gebundene Zahnradstufe 7 zur Vorgelegewelle 4 und von letzterer über die Zahnradstufe 30 zur Ausgangswelle 5.

Gemäß der Schalttabelle der Fig. 3 ist im zweiten Gang die Schaltkupplung K2 eingerückt und dadurch das Losrad 9 der Zahnradstufe 10 mit der Vorgelegewelle 4 gekuppelt. Infolgedessen verläuft der Kraftfluß von der Eingangswelle 6 über die gebundene Zahnradstufe 7 zur Vorgelegewelle 4 und von letzterer über die Zahnradstufe 10 zur Ausgangswelle 5.

Gemäß der Schalttabelle der Fig. 3 ist im 3. Gang die Schaltkupplung K3 eingerückt und dadurch das Losrad 19 der Zahnradstufe 18 mit der Eingangswelle 6 gekuppelt. Infolgedessen verläuft der Kraftfluß von der Eingangswelle 6 über die Zahnradstufe 18 direkt zur Ausgangswelle 5.

Gemäß der Schalttabelle der Fig. 3 ist im 4. Gang die Schaltkupplung K4 eingerückt und dadurch das Losrad 12 der Zahnradstufe 13 mit der Eingangswelle 6 gekuppelt. Infolgedessen verläuft der Kraftfluß von der Eingangswelle 6 über die Zahnradstufe 13 direkt zur Ausgangswelle 5.

Gemäß der Schalttabelle der Fig. 3 ist im 5. Gang die Schaltkupplung K5 eingerückt und dadurch das Losrad 8 mit der Ausgangswelle 5 gekuppelt. Infolgedessen verläuft der Kraftfluß von der Eingangswelle 6 über die Zahnradstufe 7 direkt zur Ausgangswelle 5.

Gemäß der Schalttabelle der Fig. 3 ist im Rückwärtsgang die Schaltkupplung KR eingerückt und dadurch das Losrad 17 der Zahnradstufe 14 mit der Vorgelegewelle 4 gekuppelt. Infolgedessen verläuft der Kraftfluß von der Eingangswelle 6 über die Zahnradstufe 7 zur Vorgelegewelle 4 und von letzterer über die Zahnradstufe 14 zur Ausgangswelle 5. Durch die Lage der Schaltkupplung KR im Kraftfluß an einer Stelle zwischen der gebundenen Zahnradstufe 7 und der Zahnradstufe 14 sind die Relativdrehzahlen der Schaltkupplung KR relativ klein.

Durch die Lage des Ritzels 21 in einem axial mittleren Bereich der Ausgangswelle 5 kann die Baulänge des Zahnräderwechselgetriebes gering gehalten werden.

## Patentansprüche

1. Zahnräderwechselgetriebe für Kraftfahrzeuge, bei dem sowohl eine Vorgelegewelle (4) als auch eine mit antreibbaren Fahrzeugrädern in ständige Antriebsverbindung bringbare Ausgangswelle (5) jeweils parallel zu einer von einem Antriebsmotor her antreibbaren Eingangswelle (6) angeordnet sind, und bei dem die Vorgelegewelle durch eine gebundene Zahnradstufe (7), deren mittleres Zahnrad als Losrad (8) auf der Ausgangswelle angeordnet ist, mit der Eingangswelle in ständiger Antriebsverbindung steht, und bei dem das Losrad (9) einer Zahnradstufe (10) eines Vorwärtsganges, deren Festrad (11) auf der Ausgangswelle angeordnet ist, durch eine reibschlüssige erste Schaltkupplung (K2) mit der Vorgelegewelle kuppelbar ist, und bei dem das Losrad (12) einer Zahnradstufe (13) eines weiteren Vorwärtsganges, deren Festrad (11) der Ausgangswelle zugeordnet ist, durch eine reibungsschlüssige zweite Schaltkupplung (K4) mit der Eingangswelle kuppelbar ist, und bei dem eine dreigliedrige Zahnradstufe (14) eines Rückwärtsganges, bei der das Festrad (15) der Ausgangswelle zugeordnet und ein den Drehsinn umkehrendes mittleres Zahnrad (25) als Umkehrrad drehbar auf einer zusätzlichen Zwischenwelle (16) angeordnet ist, unter Vermittlung einer zusätzlichen Schaltkupplung (KR) als Antriebsverbindung in den Kraftfluß zwischen Ein- und Ausgangswelle einschaltbar ist,
**dadurch gekennzeichnet,**
daß das als Losrad verwendete Zahnrad (17) der Zahnradstufe (14) des Rückwärtsganges sowohl unabhängig von der mit der Eingangswelle (6) verbundenen Schaltkupplung (K4) des weiteren Vorwärtsganges auf der Vorgelegewelle (4) angeordnet als auch durch die zusätzliche Schaltkupplung (KR) mit der Vorgelegewelle (4) kuppelbar und das Festrad (15) der Zahnradstufe (14) des Rückwärtsganges mit der Ausgangswelle (5) ständig drehfest verbunden ist, daß das Festrad (11) der über ihr Losrad (9) durch die erste Schaltkupplung (K2) mit der Vorgelegewelle (4) kuppelbaren Zahnradstufe (10) des einen Vorwärtsganges zusätzlich mit dem durch die zweite Schaltkupplung (K4) mit der Eingangswelle (6)kuppelbaren Losrad (12) der Zahnradstufe (13) des weiteren Vorwärtsganges kämmt, und daß das Festrad (15) der Zahnradstufe (14) des Rückwärtsganges zusätzlich mit dem einer Zahnradstufe (18) eines dritten Vorwärtsganges zugehörigen Losrad (19) kämmt, das durch eine reibschlüssige vierte Schaltkupplung (K3) mit der Eingangswelle (6) kuppelbar ist.

2. Zahnräderwechselgetriebe nach Anspruch 1,
**dadurch gekennzeichnet,**
daß die als Verbindung zwischen dem Losrad (17) der Zahnradstufe (14) des Rückwärtsganges und der Vorgelegewelle (4) verwendete Schaltkupplung (KR) reibschlüssig ist.

## Claims

1. Gearwheel change transmission for motor vehicles, in which both a countershaft (4) and an output shaft (5), capable of being brought into constant drive connection with drivable vehicle wheels, are each arranged parallel to an input shaft (6) drivable from an engine, and in which the countershaft is in constant drive connection with the input shaft by means of a bound gearwheel stage (7), the middle gearwheel of which is arranged as a loose wheel (8) on the output shaft, and in which the loose wheel (9) of a gearwheel stage (10) of one forward gear, the fixed wheel (11) of which is arranged on the output shaft, can be coupled to the countershaft by means of a non-positive first shift coupling (K2), and in which the loose wheel (12) of a gearwheel stage (13) of a further forward gear, the fixed wheel (11) of which is assigned to the output shaft, can be coupled to the input shaft by means of a non-positive second shift coupling (K4), and in which a three-membered gearwheel stage (14) of reverse gear, in which the fixed wheel (15) is assigned to the output shaft and a middle gearwheel (25) reversing the direction of rotation is arranged rotatably as a reversing wheel on an additional intermediate shaft (16), can be inserted into the force flux between the input and output shafts by means of an additional shift coupling (KR) as a drive connection, characterized in that the gearwheel (17), used as a loose wheel, of the gearwheel stage (14) of the reverse gear both is arranged independently of the shift coupling (K4), connected to the input shaft (6), of the further forward gear on the countershaft (4) and can be coupled to the countershaft (4) by means of the additional shift coupling (KR), and the fixed wheel (15) of the gearwheel stage (14) of the reverse gear is constantly connected fixedly in terms of rotation to the output shaft (5), in that the fixed wheel (11) of the gearwheel stage (10), couplable via its loose wheel (9) to the countershaft (4) by means of the first shift coupling (K2), of the one forward gear meshes additionally with the loose wheel (12), couplable to the input shaft (6) by means of the second shift coupling (K4), of the gearwheel stage (13) of the further forward gear, and in that the fixed wheel (15) of the gearwheel stage (14) of the reverse gear meshes additionally with the loose wheel (19) which is associated with a gearwheel stage (18) of a third forward gear and which can be coupled to the input shaft (6) by means of a non-positive fourth shift coupling (K3).

2. Gearwheel change transmission according to Claim 1, characterized in that the shift coupling (KR) used as a connection between the loose wheel (17) of the gearwheel stage (14) of the reverse gear and the countershaft (4) is non-positive.

## Revendications

1. Boîte de vitesses à engrenages pour véhicules automobiles, dans laquelle aussi bien un arbre de renvoi (4) qu'un arbre de sortie (5), qui peut être amené à engrener, selon une liaison d'entraînement permanent, avec des roues motrices du véhicule, sont disposés parallèlement à un arbre d'entrée (6), qui peut être entraîné par un moteur d'entraînement, et dans laquelle l'arbre de renvoi est relié selon une liaison d'entraînement permanent à l'arbre d'entrée par l'intermédiaire d'un étage combiné de pignons (7), dont le pignon central est monté en tant que pignon libre sur l'arbre de sortie, et dans laquelle le pignon libre (9) d'un étage de pignons (10) d'un rapport de marche avant, dont le pignon fixe (11) est monté sur l'arbre de sortie, peut être accouplé à l'arbre de renvoi par l'intermédiaire d'un premier embrayage à friction (K2), et dans laquelle le pignon fou (12) d'un étage de pignons (13) d'un autre rapport de marche avant, dont le pignon fixe (11) est associé à l'arbre de sortie, peut être accouplé à l'arbre d'entrée par l'intermédiaire d'un second embrayage à friction (K4), et dans laquelle un étage de pignons (14) à trois éléments d'un rapport de marche arrière, dont le pignon fixe (4) est associé à l'arbre de sortie et un pignon central (25), qui inverse le sens de rotation, est monté en tant que pignon inverseur de manière à pouvoir tourner sur un arbre intermédiaire supplémentaire (16), peut être inséré dans le flux de transmission de force entre l'arbre d'entrée et l'arbre de sortie, moyennant l'utilisation d'un embrayage supplémentaire (KR) en tant que liaison d'entraînement,
caractérisée en ce que le pignon (17), utilisé en tant que pignon fou, de l'étage de pignons (14) du rapport de marche arrière est d'une part disposé sur l'arbre de renvoi (4) indépendamment de l'embrayage (K4), relié à l'arbre d'entrée (6), de l'autre rapport de marche avant et d'autre part peut être accouplé à l'arbre de renvoi (4) au moyen de l'embrayage supplémentaire (KR), et le pignon fixe (15) de l'étage de pignons (14) du rapport de marche arrière est relié à l'arbre de sortie (5) en en étant en permanence solidaire en rotation, que le pignon fixe (11) de l'étage de pignons (10) du premier rapport de marche avant, qui peut être accouplé par l'intermédiaire de son pignon fou (9) et au moyen du premier embrayage (K2) à l'arbre de renvoi (4), engrène avec le pignon fou (12) de l'étage de pignons (13) de l'autre rapport de marche avant, qui peut être accouplé à l'arbre d'entrée (6) par l'intermédiaire du second embrayage (K4), et que le pignon fixe (15) de l'étage de pignons (14) du rapport de marche arrière engrène en outre avec le pignon fou (19) associé à un étage de pignons (18) d'un troisième rapport de marche avant et qui peut être accouplé à l'arbre d'entrée (6) au moyen d'un quatrième embrayage à friction (K3).

2. Boîte de vitesses à engrenages selon la revendication 1, caractérisée en ce que l'embrayage (KR) utilisé en tant que liaison entre le pignon fou (17) de l'étage de pignons (14) du rapport de marche arrière et l'arbre de renvoi (4) est un embrayage à friction.
